# EUROPEAN PATENT APPLICATION

(11) **EP 4 333 143 A1**
(43) Date of publication of application: **06.03.2024**
(21) Application number: 22890491.8
(22) Date of filing: 08.11.2022
(51) Int. Cl.: H01M 10/04

(54) **SECONDARY BATTERY MANUFACTURING APPARATUS AND SECONDARY BATTERY MANUFACTURING METHOD USING SAME**

(30) Priority: 08.11.2021 KR 20210152608
(71) Applicant: LG Energy Solution, Ltd., Seoul 07335 (KR)
(72) Inventor: YEE, Min Ha, Daejeon 34122 (KR); PARK, Ki Beom, Daejeon 34122 (KR); SONG, Eui Seob, Daejeon 34122 (KR); LI, Zheng Hua, Daejeon 34122 (KR); LEE, Hyo Joon, Daejeon 34122 (KR); SONG, Eun Ji, Daejeon 34122 (KR)
(74) Representative: Plasseraud IP
(86) International application number: PCT/KR2022/017461
(87) International publication number: WO 2023/080760

(57) **Abstract**

The present invention relates to an apparatus for manufacturing a secondary battery and a method for manufacturing a secondary battery using the same, and more particularly, to an apparatus for manufacturing a secondary battery, which includes a pressing part that presses a stack, in which electrodes and separators are stacked, and a method for manufacturing a secondary battery using the same.

The present invention provides an apparatus for manufacturing a secondary battery, which comprises a pressing part configured to press a stack, in which electrodes and separators are stacked, wherein the pressing part includes: a main pressing part configured to press an entire surface of the stack; and a sub pressing part configured to press a partial surface of the stack, wherein the partial surface is formed on an end of the stack in a longitudinal direction and includes a surface having a relatively low height on the entire surface, and the sub pressing part presses the partial surface while moving in the longitudinal direction of the stack.

## Description

### TECHNICAL FIELD

### CROSS-REFERENCE TO RELATED APPLICATION

The present application claims the benefit of the priority of Korean Patent Application No. 10-2021-0152608, filed on November 08, 2021, which is hereby incorporated by reference in its entirety.

### TECHNICAL FIELD

The present invention relates to an apparatus for manufacturing a secondary battery and a method for manufacturing a secondary battery using the same, and more particularly, to an apparatus for manufacturing a secondary battery, which includes a pressing part that presses a stack, in which electrodes and separators are stacked, and a method for manufacturing a secondary battery using the same.

### BACKGROUND ART

Batteries (cells) that generate electric energy through physical or chemical reaction to supply the generated electric energy to the outside are used when AC power to be supplied to the building is not obtained, or DC power is required according to the living environments surrounded by various electric and electronic devices.

Among such batteries, primary batteries and secondary batteries, which are chemical batteries using chemical reaction, are being generally used. The primary batteries are consumable batteries which are collectively referred to as dry batteries. In addition, secondary batteries are rechargeable batteries that are manufactured by using a material in a redox process between current and a substance is repeatable several times. When the reduction reaction is performed on the material by the current, power is charged, and when the oxidation reaction is performed on the material, power is discharged. Such the charging-discharging is repeatedly performed to generate electricity.

Here, in a lithium ion battery among secondary batteries, an electrode slurry, in which an active material, a conductive material, and a binder are mixed, may be applied at a predetermined thickness to a positive electrode conductive foil and a negative electrode conductive foil to manufacture an electrode, and a separator may be interposed between both the conductive foils to manufacture an electrode unit.

In addition, the secondary batteries are classified according to their structures. For example, the secondary batteries may be classified into a cylindrical secondary battery, in which long sheet-type electrode unit is wound several times in the form of a bulk jelly roll with a separator sheet therebetween to manufacture an electrode assembly, and then, the manufactured electrode assembly is accommodated in a cylindrical can so that the can is sealed, and a pouch-type secondary battery, in which electrode units, each of which has a predetermined size, are stacked with a separator sheet therebetween to manufacture an electrode assembly, and then, the manufactured electrode is accommodated in a pouch so that the pouch is sealed.

When manufacturing the electrode, the electrode slurry is non-uniformly applied to the conductive foils due to viscosity of the electrode slurry, resulting in a difference in coating thickness of the electrode slurry. The difference in coating thickness of the electrode slurry forms an non-bonded area between the electrode and the separator inside the electrode unit manufactured by including the electrode. In addition, since the pouch-type secondary battery is manufactured by stacking the electrode units on the separator sheet, the non-bonded area is formed inside the electrode assembly including the electrode units. There is a problem in that the non-bonded area as described above causes precipitation of lithium due to interfacial resistance of the negative electrode to increase in resistance of the electrode.

### DISCLOSURE OF THE INVENTION

### TECHNICAL PROBLEM

The present invention has been made to solve the above problems, and an object of the present invention is to provide an apparatus for manufacturing a secondary battery, which is capable of improving a non-bonded area of an electrode and a separator inside an electrode unit and a non-bonded area of an electrode unit and a separator sheet inside an electrode assembly, and a method for manufacturing a secondary battery.

### TECHNICAL SOLUTION

The present invention provides an apparatus for manufacturing a secondary battery, which comprises a pressing part configured to press a stack, in which electrodes and separators are stacked, wherein the pressing part includes: a main pressing part configured to press an entire surface of the stack; and a sub pressing part configured to press a partial surface of the stack, wherein the partial surface is formed on an end of the stack in a longitudinal direction and includes a surface having a relatively low height on the entire surface, and the sub pressing part presses the partial surface while moving in the longitudinal direction of the stack.

The apparatus may further include a moving part configured to move the stack in one direction, wherein the sub pressing part may press the partial surface while moving in a direction perpendicular to the one direction.

The sub pressing part may include: a drum part configured to press the partial surface of the stack while rotating the partial surface of the stack; and a rotation shaft coupled to the drum part to rotate the drum part.

The stack may include an electrode tab connected to the electrodes, and the partial surface may be disposed to correspond to the end of the stack, at which the electrode tab is disposed, in the longitudinal direction.

The apparatus may further include a heating part configured to apply heat to the stack in which the electrodes and the separators are stacked.

The sub pressing part may be disposed in front of the main pressing part.

The sub pressing part may press the partial surface of the stack while moving outward from the inside of the stack.

The sub pressing part may be disposed behind the main pressing part.

The sub pressing part may press the partial surface of the stack while moving inward from the outside of the stack.

The stack may be an electrode unit, in which the electrodes and the separators are stacked and may include any one of a bi-cell, a mono-cell, and a full-cell.

The stack may be an electrode assembly in which a plurality of electrode units, in which the electrodes and the separators are stacked, and a separator sheet are stacked.

The present invention provides a method for manufacturing a secondary battery, which includes s a stack pressing process of pressing a stack, in which electrodes and separators are stacked, wherein the stack pressing process includes: an entire surface pressing process of pressing an entire surface of the stack; and a partial surface pressing process of pressing a partial surface of the stack, wherein the partial surface is formed on an end of the stack in a longitudinal direction and includes a surface having a relatively low height on the entire surface, and wherein, in the partial surface pressing process, a sub pressing part pressing the partial surface presses the partial surface while moving in a longitudinal direction of the stack.

### ADVANTAGEOUS EFFECTS

The apparatus for manufacturing the secondary battery and the method for manufacturing the secondary battery using the same according to the present invention may have the advantage in that the surface having the relatively low height on the entire surface of the stack is pressed using the sub pressing part to improve the non-bonded area inside the stack.

In addition, the apparatus for manufacturing the secondary battery according to the present invention may have the advantage of pressing the stack in the longitudinal direction of the stack to respond to the various sizes and shapes of the surface, which has the relatively low height, of the entire surface of the stack without replacing the sub pressing part.

### BRIEF DESCRIPTION OF THE DRAWINGS

FIG. 1a is a plan view illustrating a configuration of a stack when viewed downward from the above.
FIG. 1b is a side view illustrating a configuration of the stack of FIG. 1a when viewed from one side.
FIG. 2 is a plan view illustrating a configuration of an apparatus for manufacturing a secondary battery according to Embodiment 1 of the present invention when viewed downward from above.
FIG. 3a is a detailed side view illustrating a side surface of a sub pressing part of FIG. 2.
FIG. 3b is an enlarged view illustrating a portion A of FIG. 3a, i.e., a detailed enlarged view illustrating a state in which the sub pressing part presses a stack.
FIG. 4 is a detailed perspective view illustrating a configuration of the sub pressing part in the apparatus for manufacturing the secondary battery of FIG. 2.
FIGS. 5a and 5b are images illustrating results obtained by comparing non-bonded areas of bi-cells manufactured by an apparatus for manufacturing a secondary battery according to a related art and an apparatus for manufacturing a secondary battery according to the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention may provide an apparatus for manufacturing a secondary battery, which includes a pressing part 100 that presses a stack 10 in which electrodes and separators are stacked.

First, the stack 10 may be configured so that the electrodes and the separators are stacked and may have various configurations. Here, the stack 10 may be an electrode unit, in which the electrodes and the separators are stacked, i.e., a unit cell and may mean any one of a bi-cell, a mono-cell, and a full-cell and also may mean an electrode assembly in which a plurality of electrode units (unit cells), in which the electrodes and the separators are stacked, and a separator sheet are stacked.

Here, the electrode assembly may have any structure as long as the electrode assembly has a structure in which the plurality of electrode units and the separator sheet are stacked. As an example, the electrode assembly may have a structure in which the plurality of electrode units are arranged or disposed on the separator sheet. As another example, the electrode assembly may have a structure in which the plurality of electrode units are arranged or disposed on the separator sheet, and then, the electrode units and the separator sheet are alternately stacked and folded.

Here, the stack 10 may be pressed by a pressing part 100 to be described later so as to bond the electrode to the separator, and the electrode unit to the separator sheet. Here, an entire surface of the stack 10 provided to face the pressing part 100 to be pressed may be defined as an entire surface 11.

As described above, since electrode slurry is non-uniformly applied on an electrode collector (e.g., conductive foil), the entire surface 11 may have a height difference. Particularly, since a surface formed at a relatively low height on the entire surface 11 is difficult to perform pressing during a pressing process, the surface may remain as a non-bonded area between the electrode and the separator or the electrode unit and the separator sheet to cause precipitation of lithium on an interface of a negative electrode.

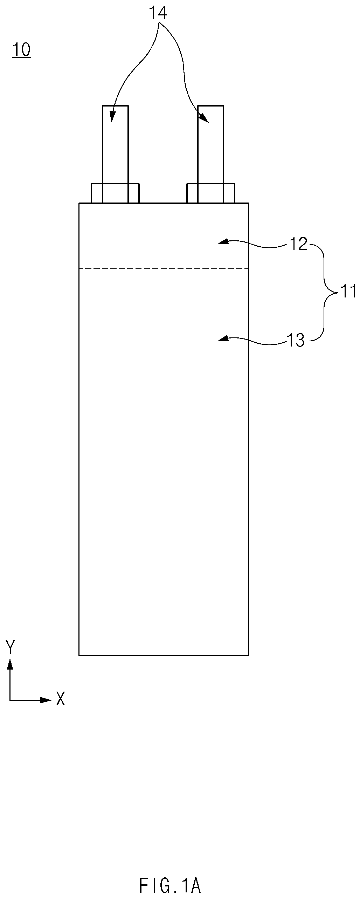

In more detail, as illustrated in FIGS. 1a to 1b, the entire surface 11 of the stack 10 may include a partial surface 12 including a surface formed at a relatively low height on the entire surface 11 and a remaining surface 13 formed at a uniform height by uniformly applying electrode slurry on the electrode collector on the entire surface 11. In the drawing, dotted lines illustrated in the stack 10 is for distinguishing the partial surface 12 from the remaining surface 13 and does not mean that an internal structure of the stack 10 is separated.

Here, the partial surface 12 may be a surface including a surface formed at a relatively low height on the entire surface 11 of the stack 10 because the electrode slurry is less applied on the electrode collector and may have various configurations.

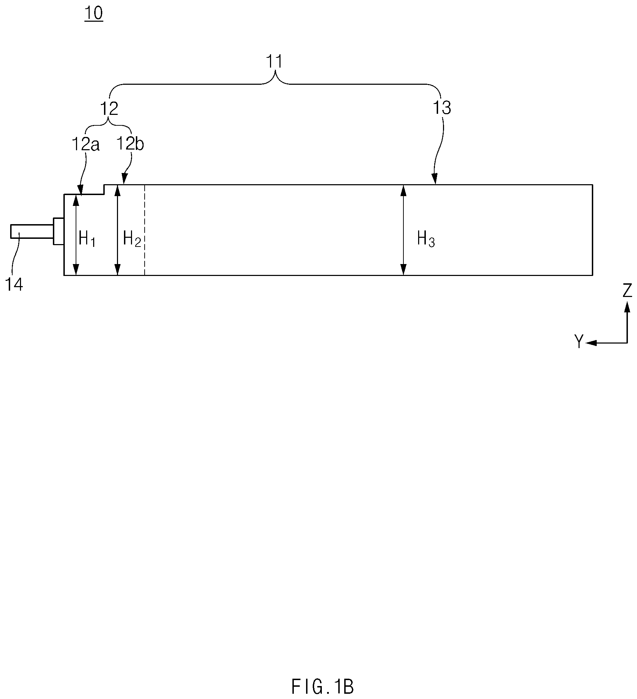

As an example, the partial surface 12 may be a surface on which a height difference is formed, and may include, as illustrated in FIG. 1b, a first partial surface 12a formed at a relatively low height on the entire surface 11 and a second partial surface 12b formed at a height greater than that of the first partial surface 12a.

Here, the first partial surface 12a may be a surface formed at a relatively low height on the front surface and may be a surface corresponding to the non-bonded area inside the stack 10. As illustrated in FIG. 1b, the first partial surface 12a may be disposed at a first height H₁.

In addition, the first height H₁ may be defined as a height, at which a height of the other surface facing one surface is formed relatively lower than a height H₃ of a remaining surface 13 of the entire surface 11, based on the one surface of the stack 10 disposed in a stacking direction of the electrodes and the separators. In addition, the height H₃ of the remaining surface 13 may be understood as a height up to the other surface facing the one surface, based on the one surface of the stack 10 disposed in the stacking direction of the electrodes and the separators on an area on which electrode slurry is uniformly applied on the electrode collector.

In addition, the second partial surface 12b may be a surface formed higher than the first partial surface 12a and may be formed in various directions from the first partial surface 12a, based on the first partial surface 12a according to a size for each model of the stack 10 and a degree of nonuniform application of the electrode slurry within the stack 10.

For example, as illustrated in FIG. 1b, the second partial surface 12b may be formed between the first partial surface 12a and the remaining surface 13. However, the formation of the second partial surface 12b is not limited thereto and may be formed in various manners such as being surrounded by the first partial surface 12a or formed while surrounding the first partial surface 12a.

In addition, the second partial surface 12b may be a surface disposed at a second height H₂. Here, the second height H₂ may be defined as a height at which a height of the other surface facing one surface is formed higher than the first height H₁, based on the one surface of the stack 10 disposed in the stacking direction of the electrodes and the separators. In this case, the second height Hz may be the same height as the height H₃ of the remaining surface 13.

As another example, the partial surface 12 may be provided as only the first partial surface 12a having the relatively low height on the entire surface 11.

The partial surface 12 may be disposed on any portion of the stack 10.

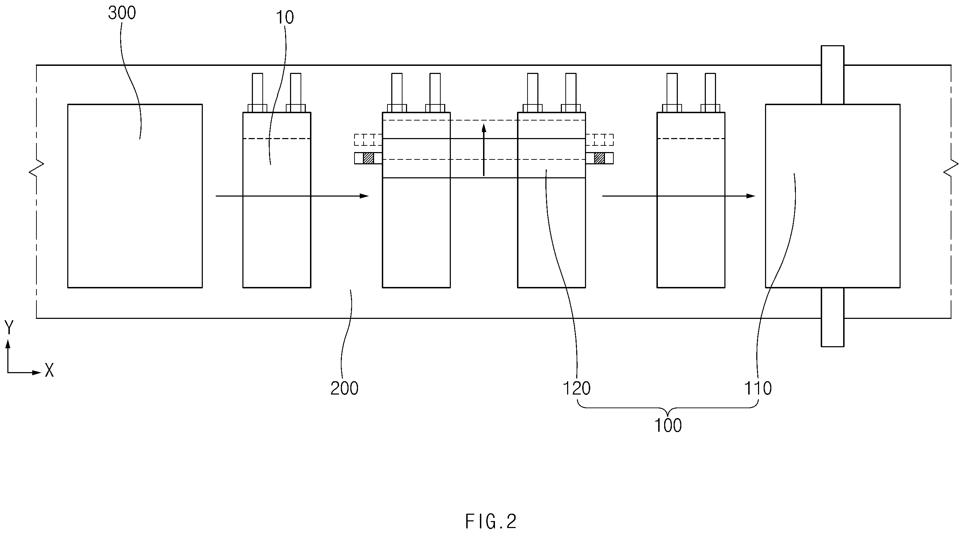

For example, as a length of the stack 10 increases, since less electrode slurry reaches an end of the stack 10, i.e., an end in the longitudinal direction, which is formed in the longitudinal direction of the stack 10 when the electrode slurry is applied, the partial surface 12 may be disposed to correspond to the end in the longitudinal direction, which is formed in the longitudinal direction of the stack 10. Here, in the present specification, the longitudinal direction of the stack 10 may be understood as a direction (y direction in FIG. 2) formed parallel to a long side of the one surface of the stack 10, based on the one surface of the stack 10 disposed in the stacking direction of the electrodes and the separators.

Particularly, the partial surface 12 may be disposed to correspond to an end of the stack 10, on which an electrode tab 14 is disposed, of ends of the stack 10 in the longitudinal direction. In the case of manufacturing the two electrodes by applying and drying the electrode slurry to a central portion of one electrode collector to cut the electrode collector during the electrode manufacturing, it may be expected that the electrode slurry is sufficiently applied to the edge in the longitudinal direction of the stack 10, which originally corresponds to the central portion of the electrode collector, but it may be understood that the electrode slurry relatively less reaches the end of the electrode collector, on which the electrode tab 14 is disposed.

Here, the electrode tab 14 may be formed on the electrode collector through a notching process before the electrode slurry is applied or may be attached to any portion of the electrode collector after the electrode slurry is applied so as to be connected to the electrode.

The above-described stack 10 may be pressed by a pressing part 100 to be described later for adhesion of the electrodes and the separators. Here, a plurality of stacks 10 may be transferred in one direction by the transfer part 200 so as to be pressed more quickly. Here, the transfer part 200 may be provided at one side of the pressing part 100 facing the pressing direction and may include a conveyor belt or the like.

The pressing part 100 may be provided at an upper side of the transfer part 200 to press the stacks 10 transferred from the transfer part 200.

Particularly, as illustrated in FIG. 2, the pressing part 100 according to the present invention may include: a main pressing part 110 that presses the entire surface 11 of the stack 10; and a sub pressing part 120 that presses the partial surface 12 of the stack 10.

Here, the main pressing part 110 may be configured to press the entire surface 11 of the stack 10 and may have various configurations.

For example, the main pressing part 110 may be provided as a roller that presses the stack 10 while rotating or a press that presses the stack 10 while moving the stack 10 in a vertical direction. Here, when the stack 10 is the electrode unit, the main pressing part 110 may be provided as a roller, and when the stack 10 is the electrode assembly, the main pressing part 110 may be provided as a press.

The sub pressing part 120 may be configured to press the partial surface 12 of the stack 10 and may have various configurations.

Specifically, the sub pressing part 120 may additionally press the partial surface 12 including the surface formed at a relatively low height on the entire surface 11 separately from being pressed by the main pressing part 110, thereby improving the non-bonded area of the stack 10.

Here, the sub pressing part 120 may be provided to be movable so as to respond to various changes in surface formed at a relatively low height on the entire surfaces 11 of the individual stack 10. In more detail, the sub pressing part 120 may be provided to be movable in consideration that the stack 10 has various lengths and widths for each model, and the area, to which the electrode slurry does not reach, is irregularly formed for each stack 10.

Particularly, the sub pressing part 120 may be provided to be movable in the longitudinal direction of the stack 10 in consideration that the partial surface 12 is formed at the end of the stack 10 in the longitudinal direction as described above.

Specifically, as illustrated in FIG. 2, the sub pressing part 120 may press the partial surface 12 while moving in the longitudinal direction of the stack 10.

More specifically, as illustrated in FIG. 2, in the sub pressing part 120 may move in a direction (y direction in FIG. 2) perpendicular to the transfer direction (x direction in FIG. 2) of the stack 10 to press the partial surface 12 when the stack 10 is transferred in one direction (x direction in FIG. 2) perpendicular to the longitudinal direction (y direction in FIG. 2) of the stack 10 on the transfer part 200.

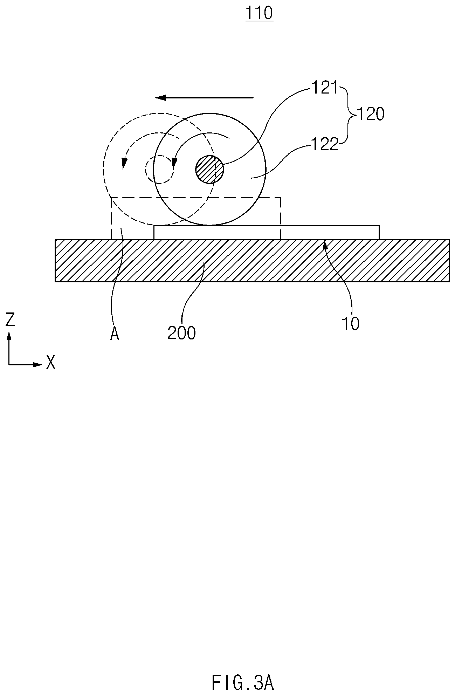

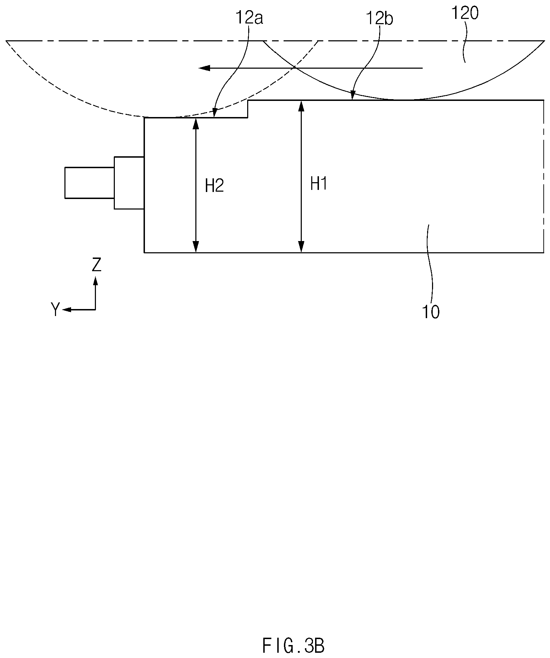

In this case, as illustrated in FIG. 3a, since the sub pressing part 120 sequentially presses the stack 10 in the longitudinal direction of the stack 10, as illustrated in FIG. 3b, the sub pressing part 120 may press the entire area of the first partial surface 12a regardless of the formed position of the first partial surface 12a, which is formed at a relatively low height, on the partial surface 12 formed on the end of the stack 10 in the longitudinal direction of the stack 10.

Here, when both the main pressing part 110 and the sub pressing part 120 described above are provided as rollers, a rolling direction of the main pressing part 110 and the sub pressing part 120 may be orthogonal to each other.

In addition, the sub pressing part 120 may move from the inside of the stack 10 toward the outside in the longitudinal direction of the stack 10 or may move from the outside of the stack 10 toward the inside.

The sub pressing part 120 may have various structures.

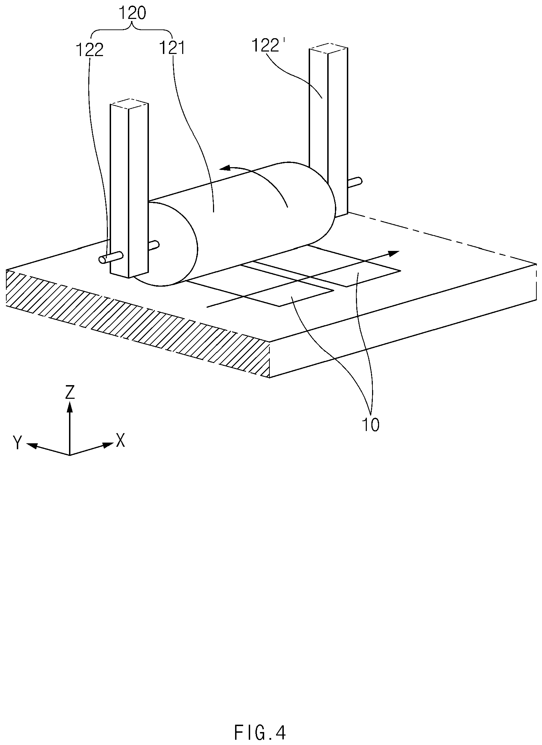

For example, as illustrated in FIG. 4, the sub pressing part 120 may include a drum part 121 that rotates and presses the partial surface 12 of the stack 10; and a rotation shaft 122 coupled to the drum part 121 to rotate the drum part.

Here, the drum part 121 may be configured to press the partial surface 12 of the stack 10 while rotating and may have various configurations.

Specifically, the drum part 121 may be rotated by receiving rotational force from the rotation shaft 122 and may have various shapes. For example, the drum part 121 may have a cylindrical cylinder shape, a wheel shape having a plurality of spokes, and the like.

Also, the drum part 121 may have various sizes. However, when the sub pressing part 120 moves in the longitudinal direction of the stack 10, it is preferable that a width of the drum part 121 is equal to or greater than a width of the stack 10. Here, each of the width of the drum part 121 and the width of the stack 10 may be understood as a width in which the transfer direction of the stack 10 transferred on the transfer part 200 is the longitudinal direction.

The rotation shaft 122 may be configured to rotate the drum part by being coupled to the drum part 121 and may have various configurations.

For example, one end of the rotation shaft 122 may be connected to a driving motor to receive rotational force, and thus, the rotational force of the driving motor may be transmitted to the drum part 121. In addition, the rotation shaft 122 may include a bearing (not shown) provided while surrounding an outer circumferential surface of the rotation shaft 122 between the rotation shaft 122 and the drum part 121.

In addition, the rotation shaft 122 may be coupled to a support part 122' capable of being connected to a moving part (not shown) that moves the sub pressing part 120. Here, the support part 122' may be coupled to the rotation shaft 122 to rotatably support the rotation shaft 122, for example, may be bearing-coupled to the rotating shaft 122.

The above-described moving part (not shown) may have any configuration as long as the moving part moves the sub pressing part 120 in a horizontal direction and/or a vertical direction. For example, the moving part (not shown) may include a coupling unit (not shown) coupled to the sub pressing part 120 to move the sub pressing part 120 and a driving unit (not shown) that drives the coupling unit (not shown). Here, the coupling unit (not shown) may be bolt-coupled to the above-described support part 122', and the driving unit may include an actuator or the like.

The above-described sub pressing part 120 may be disposed on at least one of a front or rear side of the main pressing part 110 to press the partial surface 12 of the stack 10 before the pressing of the entire surface 11 of the stack 10 and/or after the pressing of the entire surface 11. Here, a direction toward the traveling direction of the stack 10 on the transfer part 200 may be referred to as a front side, and a direction opposite to the front side may be referred to as a rear side.

As an example, the sub pressing part 120 may be disposed in front of the main pressing part 110. In this case, since the stack 10 is in a state of being pressed by the main pressing part110, when the sub pressing part 120 moves inward from the outside of the stack 10, the electrodes and the separators may be pushed to generate air bubbles inside the stack 10. Thus, when the sub pressing part 120 is disposed in front of the main pressing part 110, it is preferable that the sub pressing part 120 moves outward from the inside of the stack 10 to press the partial surface 12 of the stack.

As another example, the sub pressing part 120 may be disposed behind the main pressing part 110. In this case, since the stack 10 is not pressed, the sub pressing part 120 may press the partial surface 12 of the stack 10 while moving inward from the outside of the stack 10. However, even at this time, the sub pressing part 120 may press the partial surface 12 of the stack 10 while moving outward from the inside of the stack 10.

The apparatus for manufacturing the secondary battery according to the present invention may further include a heating part 300 that applies heat to the stack 10.

The heating part 300 may be configured to apply heat to the stack 10 in which the electrodes and the separators are stacked and may have various configurations. Here, the heating part 300 may be disposed at a rear side of the pressing part 100, and as described above, the rear side may mean a direction opposite to the direction in which the stack 10 travels on the conveyor belt.

In more detail, the heating part 300 may be disposed behind the pressing part 100 to apply the heat to the stack 10 before the pressing part 100 presses the stack 10. That is, as a temperature of the stack 10 increases, bonding between the electrode and the separator may be improved, and wrinkles formed on the electrode, the separator, and the separator sheet inside the stack during the manufacturing process may be improved.

Here, the stack 10 may be heated to a temperature higher than room temperature. Here, the meaning of the room temperature refers to a temperature range called 'room temperature' in the art. In other words, the room temperature refers to a temperature of a laboratory, etc., in particular, it is an expression of temperature conditions used when experiments are conducted without specifying or controlling a temperature or when samples and substances are left in an indoor space and refers to an indoor air temperature. In general, it is a temperature at which humans lives comfortably and is usually around 15°C to 20°C.

The present invention provides a method for manufacturing a secondary battery, which includes a stack pressing process of pressing a stack 10 in which electrodes and separators are stacked.

Here, the stack 10 may be configured so that the electrodes and the separators are stacked and may have various configurations. Here, the stack 10 may be an electrode unit, in which the electrodes and the separators are stacked, i.e., a unit cell and may mean any one of a bi-cell, a mono-cell, and a full-cell and also may mean an electrode assembly in which a plurality of electrode units (unit cells), in which the electrodes and the separators are stacked, and a separator sheet are stacked.

The stack pressing process may include: an entire surface pressing process of pressing an entire surface 11 of the stack 10; and a partial surface pressing process of pressing a partial surface of the stack 10.

First, the entire surface pressing process may be a process of pressing an entire surface 11 of the stack 10 and may be performed in various methods.

Here, the entire surface 11 may be performed by pressing the entire surface 11 of the stack 10 through the above-described main pressing part 110. However, since the electrode slurry is non-uniformly applied on the electrode collector to cause a difference in height on the entire surface of the stack 10, a non-bonded area may occur on the partial surface 12, which includes a surface having a relatively low height, on the entire surface.

The entire surface pressing process may be a process of pressing the partial surface 12 of the stack 10 and may be performed in various methods.

Specifically, the partial surface pressing process may be performed by pressing the partial surface 12 of the stack 10 through a sub pressing part 120 in consideration of a transfer speed and a transfer position of the stack 10. Here, the detailed configuration and effects of the sub pressing part 120 may be cited from the above description.

That is, the partial surface pressing process may be a process of additionally pressing the partial surface 12 of the stack 10 in order to improve the non-bonded area of the partial surface 12. Here, the partial surface pressing process may be performed not only after the entire surface pressing process, but also before the entire surface pressing process.

In more detail, the partial surface pressing process may include a descending process of allowing the sub pressing part 120 to descend from one position toward the stack 10; a pressing and moving process of moving the stack 10 to the sub pressing part 120 while pressing the stack 10 in a longitudinal direction; and a returning process of allowing the sub pressing part 120 to return to the one position.

Here, the descending process may be a process of allowing the sub pressing part 120 to descend from the one position toward the stack 10 and may be performed in various methods.

Specifically, the descending process may be performed by allowing the sub pressing part 120 to descend so that the sub pressing part 120 is in contact with the stack 10 and/or presses the stack 10 by using the above-described moving unit (not shown).

The pressing and moving process may be a process of moving the stack 10 while pressing the stack 10 in the longitudinal direction of the stack 10 and may be performed in various methods.

Specifically, the pressing and moving process may be performed by horizontally moving the sub pressing part 120 in the longitudinal direction of the stack 10 using the above-described moving part (not shown).

In addition, the returning process may be a process of allowing the sub pressing part 120 to return to the one position and may be performed in various methods.

For example, in the returning process, after the sub pressing part 120 completely presses the stack 10, the sub pressing part 120 may ascend and horizontally move by the above-described moving unit (not shown) to return to the one position.

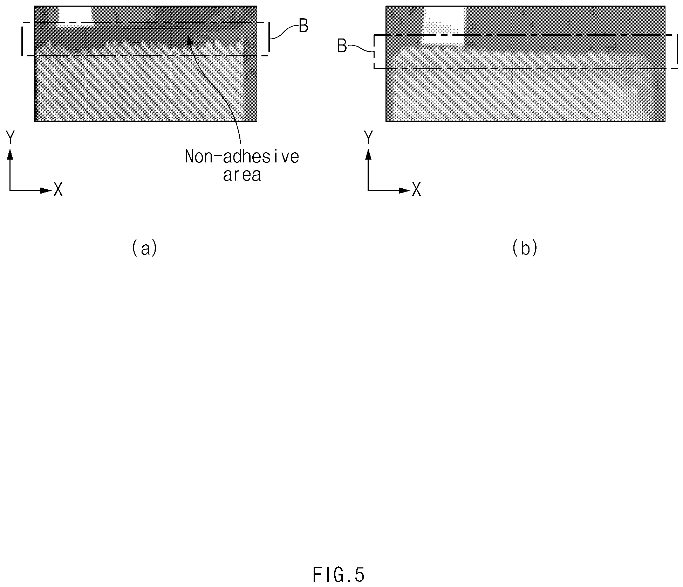

Hereinafter, referring to FIG. 5, a size of the non-bonded area of the stack according to whether the present invention is applied will be described. Here, the stack may be a bi-cell, and (a) of FIG. 5 illustrates a front image (hereinafter, reference to as `Comparative Example') of a bi-cell manufactured according to the related art, and (b) of FIG. 6 illustrates a front image (hereinafter, referred to as an 'embodiment of the present invention') of a bi-cell manufactured according to the present invention.

First, referring to the front image of the bi-cell, which is formed by Comparative Example in (a) of FIG. 5, it is seen that an non-bonded area of an electrode and a separator, which has a black color, is formed on an edge portion B corresponding to an upper portion of the bi-cell, i.e., an electrode tab. In addition, in the case of an electrode assembly including the unit cell as described above, it is expected that a non-bonded area between the unit cell and a separator sheet occurs, and thus, lithium is precipitated on a negative electrode to increase in resistance of the electrode. Thus, a problem in which performance of the secondary battery is deteriorated may occur.

On the other hand, referring to the front image of the bi-cell formed according to the embodiment of the present invention in (b) of FIG. 5, it is seen that almost no non-bonded area is formed on an upper portion of the bi-cell, i.e., an edge portion B corresponding to the electrode tab. Therefore, it is expected that the electrode unit formed according to an embodiment of the present invention will hardly form not only the non-bonded area of the electrode and the separator inside the electrode unit, but also the non-bonded area between the unit cell and the separator sheet on the electrode assembly, and thus, there may be an advantage in that the performance of the secondary battery is improved by minimizing the lithium precipitation on the negative electrode due to interfacial resistance.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Stack
11: Entire surface
12: Partial surface
12a: First partial surface
12b: Second partial surface
13: Remaining surface
14: Electrode tab
100: Pressing part
110: Main pressing part
120: Sub pressing part
121: Drum part
122: Rotation shaft
122': Support part
200: Transfer part
300: Heating part
H₁: First height
H₂: Second height
H₃: Third height

## Claims

1. An apparatus for manufacturing a secondary battery, which comprises a pressing part configured to press a stack, in which electrodes and separators are stacked,
wherein the pressing part comprises:
a main pressing part configured to press an entire surface of the stack; and
a sub pressing part configured to press a partial surface of the stack,
wherein the partial surface is formed on an end of the stack in a longitudinal direction and comprises a surface having a relatively low height on the entire surface, and
the sub pressing part presses the partial surface while moving in the longitudinal direction of the stack.

2. The apparatus of claim 1, further comprising a moving part configured to move the stack in one direction,
wherein the sub pressing part presses the partial surface while moving in a direction perpendicular to the one direction.

3. The apparatus of claim 1, wherein the sub pressing part comprises:
a drum part configured to press the partial surface of the stack while rotating the partial surface of the stack; and
a rotation shaft coupled to the drum part to rotate the drum part.

4. The apparatus of claim 1, wherein the stack comprises an electrode tab connected to the electrodes, and
the partial surface is disposed to correspond to the end of the stack, at which the electrode tab is disposed, in the longitudinal direction.

5. The apparatus of claim 1, further comprising a heating part configured to apply heat to the stack in which the electrodes and the separators are stacked.

6. The apparatus of claim 1, wherein the sub pressing part is disposed in front of the main pressing part.

7. The apparatus of claim 6, wherein the sub pressing part presses the partial surface of the stack while moving outward from the inside of the stack.

8. The apparatus of claim 1, wherein the sub pressing part is disposed behind the main pressing part.

9. The apparatus of claim 8, wherein the sub pressing part presses the partial surface of the stack while moving inward from the outside of the stack.

10. The apparatus of claim 1, wherein the stack is an electrode unit, in which the electrodes and the separators are stacked and comprises any one of a bi-cell, a mono-cell, and a full-cell.

11. The apparatus of claim 1, wherein the stack is an electrode assembly in which a plurality of electrode units, in which the electrodes and the separators are stacked, and a separator sheet are stacked.

12. A method for manufacturing a secondary battery, which comprises a stack pressing process of pressing a stack, in which electrodes and separators are stacked,
wherein the stack pressing process comprises:
an entire surface pressing process of pressing an entire surface of the stack; and
a partial surface pressing process of pressing a partial surface of the stack,
wherein the partial surface is formed on an end of the stack in a longitudinal direction and comprises a surface having a relatively low height on the entire surface, and
wherein, in the partial surface pressing process, a sub pressing part pressing the partial surface presses the partial surface while moving in a longitudinal direction of the stack.
